(19) Europäisches Patentamt
European Patent Office
Office européen des brevets

(11) **EP 2 770 644 B1**

(12) **FASCICULE DE BREVET EUROPEEN**

(45) Date de publication et mention
de la délivrance du brevet:
**04.11.2015 Bulletin 2015/45**

(51) Int Cl.:
**H04B 1/7073** *(2011.01)* **G01S 19/30** *(2010.01)*

(21) Numéro de dépôt: **14155621.7**

(22) Date de dépôt: **18.02.2014**

(54) **Méthode d'acquisition d'un signal GPS par décodage itératif**

Methode zur Erfassung eines GPS-Signals durch iterative Dekodierung

Method for acquiring a GPS signal by iterative decoding

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.02.2013 FR 1351423**

(43) Date de publication de la demande:
**27.08.2014 Bulletin 2014/35**

(73) Titulaire: **Commissariat à l'Énergie Atomique
et aux Énergies Alternatives
75015 Paris (FR)**

(72) Inventeurs:
• **Bouvier des Noes, Mathieu
38000 Grenoble (FR)**
• **Savin, Valentin
38000 Grenoble (FR)**

(74) Mandataire: **Augarde, Eric et al
Brevalex
56 Boulevard de l'Embouchure,
Bât. B
B.P. 27519
31075 Toulouse Cedex 2 (FR)**

(56) Documents cités:
**US-A1- 2010 310 009**

• **CHUGG K M ET AL: "A New Approach to Rapid
PN Code Acquisition Using Iterative Message
Passing Techniques", IEEE JOURNAL ON
SELECTED AREAS IN COMMUNICATIONS, IEEE
SERVICE CENTER, PISCATAWAY, US, vol. 23,
no. 5, 1 mai 2005 (2005-05-01), pages 884-897,
XP011131230, ISSN: 0733-8716, DOI:
10.1109/JSAC.2005.845424**
• **LIU JINGYE ET AL: "GPS C/A Code Signal
Simulation Based on MATLAB",
INSTRUMENTATION, MEASUREMENT,
COMPUTER, COMMUNICATION AND CONTROL,
2011 FIRST INTERNATIONAL CONFERENCE ON,
IEEE, 21 octobre 2011 (2011-10-21), pages 4-6,
XP032116348, DOI: 10.1109/IMCCC.2011.10
ISBN: 978-0-7695-4519-6**

EP 2 770 644 B1

**Description**

**DOMAINE TECHNIQUE**

La présente invention concerne de manière générale le domaine des systèmes de positionnement par satellites tels que le système GPS (*Global Positioning System*) ou le système Galileo. Elle s'applique plus particulièrement à la phase d'acquisition d'un signal satellitaire par un récepteur GPS.

**ÉTAT DE LA TECHNIQUE ANTÉRIEURE**

Un récepteur GPS détermine classiquement sa position en mesurant les temps de vol de signaux reçus d'une pluralité de satellites (en principe au moins quatre). Pour estimer le temps de vol d'un signal GPS émis par un satellite, le récepteur utilise un canal d'acquisition grossière dit canal C/A (*Coarse Acquisition*) sur lequel le satellite émet un message de navigation étalé spectralement au moyen d'une séquence pseudo-aléatoire (dite séquence d'étalement) possédant de bonnes propriétés d'auto-corrélation ainsi que d'inter-corrélation (avec les séquences PRN utilisées par les autres satellites).

Les bonnes propriétés d'auto-corrélation des séquences d'étalement permettent d'optimiser la probabilité de détection d'un signal en présence de bruit alors les bonnes propriétés d'inter-corrélation de ces séquences permettent aux différents satellites de partager une même bande de transmission au moyen d'un accès multiple par répartition de codes (CDMA).

La première tâche d'un récepteur GPS est de détecter les satellites en visibilité. Pour ce faire, le récepteur cherche à détecter le code d'étalement du satellite dont il souhaite tester la présence et, le cas échéant, se synchronise par rapport à ce signal. Cette première tâche est dénommée étape d'acquisition du signal GPS.

De nombreuses méthodes d'acquisition du signal GPS sont connues de l'état de la technique, elles s'apparentent à la problématique de détection multi-utilisateur dans les systèmes CDMA. On peut notamment citer les articles de A. Polydoros et al. intitulés « A unified approach to serial search spread spectrum code acquisition » PartI : A general theory & Part II : a matched filter receiver, publiés dans IEEE Trans. on. Comm., Vol. 32, No. 5, 1984 et l'article de F. Principe et al. intitulé « Rapid acquisition of Gold codes and related sequences using iterative message passing on redundant graphical models » publié dans Proc. MILCOM'06, 2006.

Ces méthodes d'acquisition sont généralement basées sur une corrélation du signal reçu par le récepteur avec le code d'étalement du satellite à tester.

Toutefois, la méthode d'acquisition décrite dans l'article de F. Principe précité ne permet pas d'obtenir des niveaux de probabilité de détection ratée (*missed detection probability*) et de probabilité de fausse alarme suffisamment faible à bas rapport signal sur bruit (SNR). Par probabilité de détection ratée, on entend la probabilité de ne pas se synchroniser avec une séquence d'étalement d'un satellite alors que celle-ci est effectivement reçue par le récepteur. Par probabilité de fausse alarme, on entend la probabilité de se synchroniser avec une séquence d'étalement alors que celle-ci n'est pas reçue par le récepteur. A faible niveau de rapport signal sur bruit, la probabilité de fausse alarme est celle de détecter une séquence d'étalement dans du bruit.

En outre, les méthodes d'acquisition par corrélation nécessitent de tester un à un les différents codes d'étalement possibles, ce qui se traduit, dans une configuration série, par un temps d'acquisition important et, dans une configuration parallèle, par une complexité élevée.

L'article de K.M. Chugg intitulé « A new approach to rapid PN code acquisition using iterative message passing techniques » publié dans IEEE Journal on Selected Areas in Communications, Vol. 21, No. 5, Mai 2005, pp. 884-897 décrit une méthode d'acquisition d'un signal étalé au moyen d'une séquence de longueur maximale à l'aide d'un décodage itératif à passage de messages.

Le but de la présente invention est de proposer une méthode d'acquisition d'un signal satellitaire, en particulier d'un signal GPS, permettant de détecter une séquence d'étalement avec une faible probabilité de détection ratée, même à bas niveau de rapport signal sur bruit.

Un but subsidiaire de la présente invention est de proposer une méthode d'acquisition d'un signal satellitaire avec une faible probabilité de fausse alarme, même à bas niveau de rapport signal sur bruit.

Un autre but de la présente invention est de proposer une méthode d'acquisition d'un signal satellitaire présentant un meilleur compromis temps d'acquisition/complexité que dans l'art antérieur.

**EXPOSÉ DE L'INVENTION**

La présente invention est définie par une méthode d'acquisition d'un signal satellitaire par un récepteur, ledit signal étant étalé par une séquence de Gold à une fréquence bribe, ladite séquence de Gold étant obtenue comme somme d'une première M-séquence générée au moyen d'un premier registre à décalage et d'une seconde M-séquence générée au moyen d'un second registre à décalage, ladite seconde M-séquence identifiant un satellite parmi une pluralité de satellites, ladite méthode comprenant les étapes suivantes :

(a) le signal reçu en bande de base est échantillonné à la fréquence bribe à partir d'un instant déterminé pour fournir une séquence de premiers échantillons;
(b) la séquence desdits premiers échantillons est multipliée, bribe à bribe, par ladite première M-séquence pour fournir une séquence de seconds échantillons;
(c) la séquence de seconds échantillons est décodée au moyen d'un décodage itératif à passage de messages pour fournir une estimation du contenu du second registre à décalage au dit instant déterminé ;
(d) le contenu du second registre à décalage ainsi estimé est comparé à une pluralité de contenus possibles du second registre à décalage pour les différents satellites de ladite pluralité, et en cas de succès de la comparaison pour un satellite identifié, le récepteur est synchronisé avec ledit satellite identifié à l'instant déterminé.

Si le contenu du second registre à décalage ainsi estimé ne correspond à aucun desdits contenus possibles, l'instant déterminé est incrémenté d'une bribe et les étapes (a) à (d) sont itérées.

Selon un premier mode de réalisation, l'estimation du contenu du second registre à décalage est avantageusement réalisée en prenant des décisions dures sur les r premières valeurs décodées fournies par le décodage itératif à passage de messages, où r est le nombre de positions dans le premier/second registre à décalage.

De préférence, le décodage itératif à passage de messages de l'étape (c) utilise la matrice de parité :

$$
\mathbf{H} = \begin{bmatrix}
g_r & \cdots & g_0 & 0 & \cdots & \cdots & 0 \\
0 & g_r & \cdots & g_0 & 0 & \cdots & 0 \\
\vdots & \ddots & \ddots & \ddots & \ddots & \ddots & \vdots \\
0 & \cdots & 0 & g_r & \cdots & g_0 & 0 \\
0 & \cdots & \cdots & 0 & g_r & \cdots & g_0
\end{bmatrix}
$$

dans laquelle $g_r = 1$ et $g_0, ..., g_{r-1}$ sont les coefficients du polynôme générateur de la seconde M-séquence.

La seconde M-séquence est avantageusement obtenue en sommant les contenus en deux positions $\alpha_i$, $\beta_i$ du second registre à décalage, où $i$ est un indice identifiant le satellite parmi ladite pluralité de satellites, les contenus possibles du second registre à décalage pour les différents satellites étant donnés par les vecteurs :

$$
\mathbf{A}_i^{init} = \left( \mathbf{G}_y^{\alpha_i} + \mathbf{G}_y^{\beta_i} \right) \mathbf{A}_y^{init}
$$

où $\mathbf{A}_y^{int}$ est un vecteur donnant contenu du second registre à décalage à un instant de référence, et $\mathbf{G}_y$ la matrice de changement d'état du second registre à décalage.

Selon un second mode de réalisation, la séquence de seconds échantillons est permutée à l'aide d'une relation de permutation $\varphi(k) = dk + h \bmod(N)$ où $k$ est le rang de l'échantillon, $d$ est un facteur de décimation, $h$ est une valeur d'offset et $N$ est la longueur de la première M-séquence, la permutation étant effectuée avant l'étape (c) ;
l'étape (c) fournit une séquence de valeurs décodées ;
la séquence de valeurs décodées est permutée à l'aide de la relation de permutation inverse à ladite relation de permutation pour fournir une séquence de valeurs permutées;
l'estimation du contenu du second registre à décalage est réalisée en prenant des décisions dures sur les $r$ premières valeurs de la séquence de valeurs permutées, où $r$ est le nombre de positions dans le premier/second registre à décalage.

Avantageusement, le décodage itératif à passage de messages de l'étape (c) utilise la matrice de parité :

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

dans laquelle $g_r = 1$ et $g_0, \ldots, g_{r-1}$ sont les coefficients du polynôme générateur de la première M-séquence.

Selon une variante des premier et second modes de réalisation, on vérifie que le récepteur est bien synchronisé avec ledit satellite identifié en :

(e) multipliant la séquence desdits premiers échantillons, bribe à bribe, par la seconde M-séquence associée audit satellite identifié pour fournir une séquence de troisièmes échantillons ;

(f) décodant la séquence de troisièmes échantillons au moyen d'un décodage itératif à passage de messages pour fournir une estimation du contenu du premier registre à décalage au dit instant déterminé.

Si le contenu du premier registre à décalage ainsi estimé ne correspond au contenu initial du premier registre, l'instant déterminé est incrémenté d'une bribe et les étapes (a) à (f) sont itérées.

De préférence, l'estimation du contenu du premier registre à décalage est réalisée en prenant des décisions dures sur les r premières valeurs décodées fournies par le décodage itératif à passage de messages, où $r$ est le nombre de positions dans le premier/second registre à décalage.

Avantageusement, le décodage itératif à passage de messages de l'étape (f) utilise la matrice de parité

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

dans laquelle $g_r = 1$ et $g_0, \ldots, g_{r-1}$ sont les coefficients du polynôme générateur de la première M-séquence.

Selon un exemple avantageux de réalisation, le décodage itératif à passage de messages de l'étape (c) et le décodage itératif à passage de messages de l'étape (f) utilisent tous deux un algorithme de type « Min-Sum ».

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente de manière schématique un générateur de séquence maximale selon une représentation de Fibonacci ;

La Fig. 2 donne des paramètres de codes C/A pour différents satellites ;

La Fig. 3 représente de manière schématique un générateur de code C/A dans un système GPS ;

La Fig. 4 représente schématiquement une méthode d'acquisition d'un signal satellitaire selon un premier mode de réalisation de l'invention ;

La Fig. 5 représente schématiquement une méthode d'acquisition d'un signal satellitaire selon une variante du premier mode de réalisation de l'invention ;

La Fig. 6 représente schématiquement une méthode d'acquisition d'un signal satellitaire selon un second mode de réalisation de l'invention ;

La Fig. 7 représente schématiquement une méthode d'acquisition d'un signal satellitaire selon une variante du second mode de réalisation de l'invention.

## EXPOSÉ DÉTAILLÉ DE MODES DE RÉALISATION PARTICULIERS

Nous rappellerons dans un premier temps comment le signal de synchronisation grossière C/A est émis par un satellite d'un système de positionnement tel que le système GPS ou le système Galileo.

Le signal émis par un satellite sur le canal C/A peut s'exprimer sous la forme :

$$x_i(k) = d\left(\left\lfloor \frac{k}{LN} \right\rfloor\right) c_i(k) \tag{1}$$

où $i = 1,...,32$ est l'indice du satellite, $d(\ell)$ est le $\ell^{\text{ième}}$ symbole BPSK du message de navigation, $k$ est un indice temporel, $C_i(k)$ est la $k^{\text{ième}}$ bribe (chip) du code d'étalement associé au satellite $i$, où $N$ est la longueur du code d'étalement (en pratique $N = 1023$ pour le système GPS) et $L$ est le nombre de symboles BPSK du message de navigation. Pour le système GPS, chaque symbole $d(\ell)$ dure 20 ms, soit 20 périodes de répétition du code d'étalement, la fréquence bribe (ou rythme chip) étant de 1,023 MHz.

Le signal satellitaire reçu par le récepteur sur le canal C/A peut alors s'écrire, en bande de base :

$$r(k) = \sum_{i=1}^{I} \rho_i x_i(k) e^{2\pi j(k\Delta F_i T + \theta_i)} + w(k) \tag{2}$$

où $I$ est le nombre maximum de satellites ($I = 32$ dans le système GPS), $\rho_i$ est le coefficient d'atténuation du signal sur la liaison entre le satellite $i$ et le récepteur, supposé constant sur la durée du message, $\Delta F_i$ est l'offset de la fréquence porteuse (principalement dû au décalage Doppler) et $\theta_i$ est la phase du signal en provenance du satellite $i$ (supposée constante), et où enfin $w(k)$ est un échantillon de bruit supposé blanc gaussien (AWGN) de variance $\sigma^2$.

Les séquences d'étalement $c_i$ des différents satellites $i = 1,..., I$ sont des séquences de Gold, chaque séquence de Gold étant construite à partir d'une somme de deux séquences de longueur maximale, encore dénommées M-séquences. On rappelle qu'une M-séquence est une suite périodique de valeurs produite par un registre à décalage à rétroaction linéaire (LFSR) qui explore toutes les valeurs pouvant être produites par le registre à décalage. Toute combinaison linéaire de deux M-séquences de même degré $r$ (c'est-à-dire générées par des polynômes générateurs de même degré) ne donne pas nécessairement une séquence de Gold : une paire de M-séquences dont la somme donne une séquence de Gold est appelée paire de séquences préférentielles.

Les séquences d'étalement $c_i$ du canal C/A sont chacune construites à partir d'une paire de M-séquences préférentielles, $x$ et $y$. Plus précisément :

$$c_i(k) = x(k) + y(k - \tau_i) \tag{3}$$

où $\tau_i$ est un retard, exprimé en nombre de périodes bribes, spécifique au satellite $i$.

Les M-séquences $x$ et $y$ sont respectivement générées à partir des polynômes générateurs :

$$g_x(D) = D^{10} + D^3 + 1$$

$$g_y(D) = D^{10} + D^9 + D^8 + D^3 + D^2 + 1 \tag{4}$$

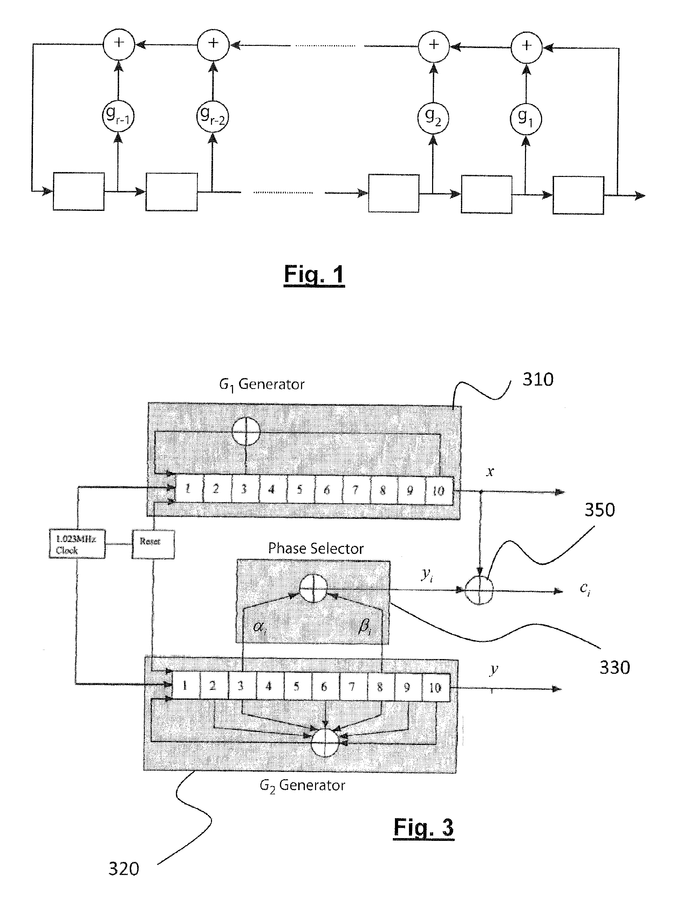

On rappelle qu'une séquence LFSR générée par un polynôme générateur $g(D) = 1 + \sum_{p=1}^{r-1} g_p D^p$ de degré $r$ est obtenue par un registre à décalage à $r$ positions mémoire (dénommées ci-après plus simplement positions) et $r$ prises, rebouclé sur lui-même, comme représenté en Fig. 1, selon la représentation dite de Fibonacci. Les coefficients multiplicateurs sur les différentes prises sont les coefficients du polynôme générateur.

Une M-séquence est définie de manière univoque par son polynôme générateur, le contenu du registre à décalage à l'instant initial donnant sa valeur à l'origine. Une M-séquence générée par un polynôme générateur (primitif) de degré $r$ est périodique et de longueur $N = 2^r - 1$.

Les M-séquences $x$ et $y$ sont générées en initialisant les positions de leurs registres à décalage respectifs à 1, soit $x(0) = x(1) = ... = x(9) = 1$ et $y(0) = y(1) = ... = y(9) = 1$.

La séquence retardée $y_i$ définie par $y_i(k)=y(k-\tau_i)$ est avantageusement obtenue en utilisant la propriété « add and shift » des M-séquences. Plus précisément, les délais $\tau_i$ sont choisis de sorte à ce que la séquence $y_i$ puisse être générée à partir de la somme des contenus en deux positions $\alpha_i$ et $\beta_i$ du registre à décalage générant la séquence $y$ soit :

$$y_i(k) = a_{\alpha_i}(k) + a_{\beta_i}(k) \tag{5}$$

où $a_{\alpha i}(k)$, $a_{\beta i}(k)$ sont respectivement les contenus du registre à décalage aux positions $\alpha_i$ et $\beta_i$, à l'instant $k$, autrement dit $a_{\alpha_i}(k) = y(k+\alpha_i)$ et $a_{\beta_i}(k) = y(k+\beta_i)$.

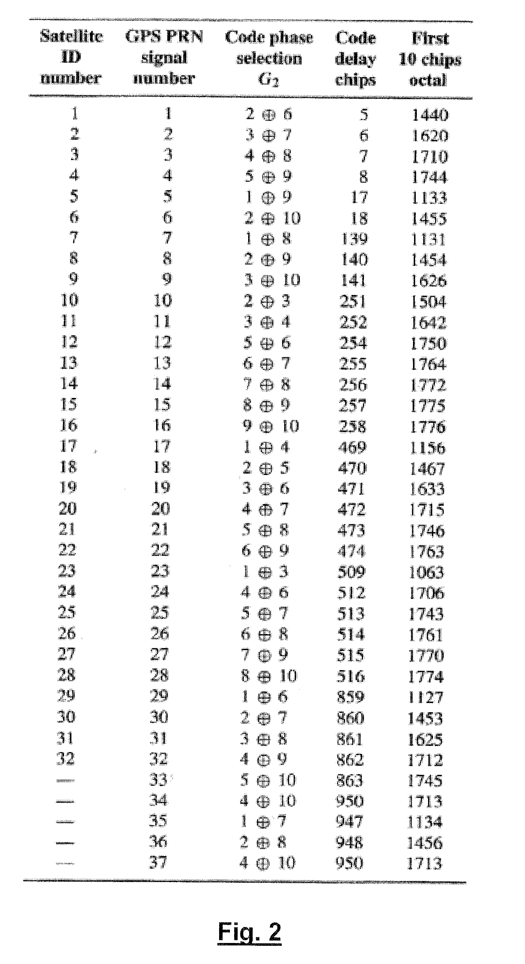

On a représenté en Fig. 2 une table donnant les paramètres $\alpha_i$, $\beta_i$ et $\tau_i$ pour les différents satellites. Plus précisément, la colonne intitulée « code phase selection » donne les positions $\alpha_i$, $\beta_i$ et la colonne intitulée « code delay chips » donne le retard $\tau_i$. Enfin, la dernière colonne fournit le mot d'initialisation, c'est-à-dire les 10 premières valeurs de la séquence $y_i$ en représentation octale.

La Fig. 3 représente de manière schématique un générateur de code C/A dans un système GPS.

On distingue dans la partie supérieure le générateur, 310, de la M-séquence X et dans la partie inférieure le générateur, 320, de la M-séquence $y$. Les deux générateurs 310 et 320 utilisent des registres à décalage rebouclés sur eux-mêmes. Pour chaque générateur, les prises du registre à décalage correspondent aux monômes du polynôme générateur correspondant. Le sélecteur de phase, 330, vient sommer sélectivement certaines positions du registre à décalage de 320. Le choix de ces positions $\alpha_i$ et est effectué selon la table de la Fig. 2, la somme des contenus du registre en ces deux positions fournissant la séquence retardée $y_i$. Cette implémentation est avantageuse dans la mesure où elle ne nécessite pas l'utilisation d'une importante ligne à retard, de longueur $\tau_i$.

La somme des M-séquences $X$ et $y_i$ en 350 donne la séquence de Gold $c_i$, autrement dit la séquence d'étalement relative au satellite $i$.

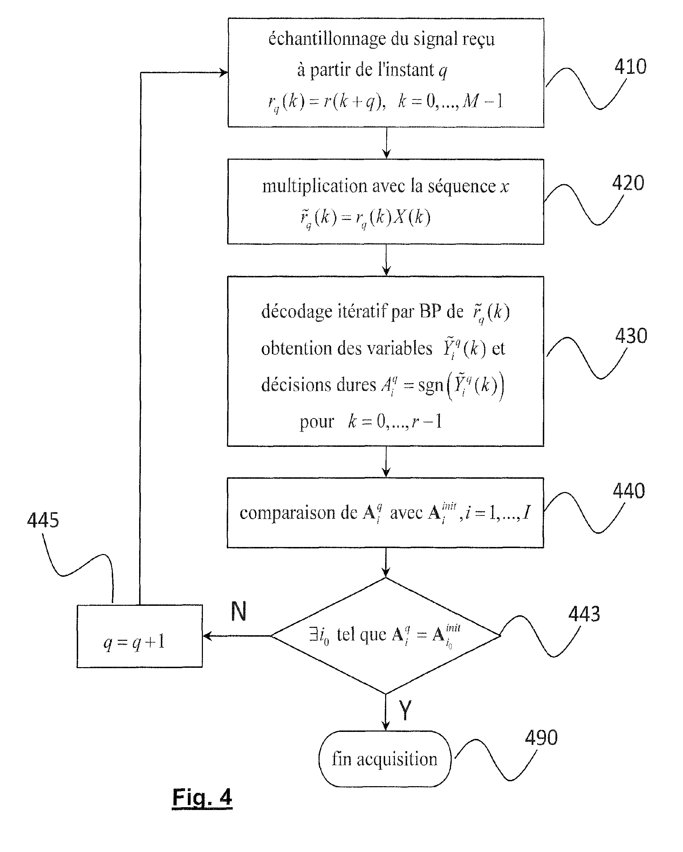

La Fig. 4 représente schématiquement une méthode d'acquisition d'un signal satellitaire selon un premier mode de réalisation de l'invention.

On considérera dans un premier temps la synchronisation du récepteur par rapport à un signal GPS d'un satellite $i$.

Le récepteur échantillonne à la fréquence bribe le signal satellitaire reçu, après démodulation en bande de base.

A chaque instant $q$, le récepteur forme en 410 un vecteur constitué de $M$ échantillons successifs du signal ainsi reçu, soit $r_q(k) = r(k+q)$, $k = 0, ..., M$-1, où $M = N+1$ est la période de la M-séquence ( $M = 1024$ dans le système GPS).

Le récepteur teste alors s'il est bien synchronisé avec la M-séquence $x$. Pour ce faire, il fait l'hypothèse qu'il est synchronisé avec cette séquence et effectue une multiplication bribe à bribe du signal reçu avec la M-séquence $X$, à l'étape 420, soit :

$$\tilde{r}_q(k) = r_q(k)\, X(k) \tag{6}$$

où $X(k) =1- 2x(k)$ est la représentation bipolaire (BPSK) de la M-séquence $x$.

Cette opération permet d'éliminer la M-séquence $x$ du signal reçu :

$$\tilde{r}_q(k) = \rho_i Y_i(k) + \tilde{w}(k) \tag{7}$$

où $Y_i(k) = 1- 2y_i(k)$ est la représentation bipolaire de la M-séquence $y_i$ et où $\tilde{W}(k)$ regroupe toutes les sources de bruit.

On déduit de l'expression (7) que le vecteur $\tilde{r}_q(k)$, $k = 0,..., M$-1 est une observation bruitée de $M$ bribes consécutives de la séquence $y_i$.

On effectue à l'étape 430 un décodage itératif à passage de messages (encore dénommé à propagation de croyance ou *belief propagation*) du mot $r_q(k)$ $k= 0,..., M$- 1 En effet, l'opération qui associe le contenu (à l'instant $q$) du registre à décalage d'un générateur d'une M-séquence à la M-séquence elle-même peut être considérée comme un codage linéaire cyclique de rendement $r/2^r$ -1 (le mot du registre est de taille $r$ alors que la M-séquence est de taille $N = 2'$ -1).

De manière générale, si l'on considère une M-séquence $z$ définie par un polynôme générateur

$g_z(D) = \sum_{p=0}^{r-1} g_p D^p$ , on a la contrainte de parité :

$$\sum_{p=0}^{r} g_{r-p} z(p+k) = 0 \tag{8}$$

dans laquelle on a défini $g_r$ =1. La matrice de parité du code est la matrice de taille *(M-r)x M:*

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix} \tag{9}$$

Le décodage s'effectue alors comme pour un décodage par passage de messages entre noeuds de variable (les variables $y_i(k)$) et noeuds de contrainte (les contraintes de parité données par les lignes de la matrice de parité **H** où les coefficients sont ceux du polynôme $g_y(D)$).

Une description de la méthode de décodage par passage de messages a été donnée dans l'article de F.R. Kschichang et al. intitulé « Factor graphs and the Sum-Product algorithm » publié dans IEEE Trans. on Information Theory, Vol. 47, No. 2, Feb. 2001. Une version plus simple mais sous-optimale de cet algorithme a été proposée par V. Savin dans l'article intitulé « Self-corrected Min-Sum decoding of LDPC codes » publié dans Proc. of Int'l Symposium on Information Theory (ISIT 2008), Toronto, Juillet 2008.

Quelle que soit la version utilisée, le décodage du mot, $\tilde{r}_q(k)$, $k$=0,...,$M$-1 (ou d'une partie de ce mot seulement puisque celui-ci présente une redondance très élevée) fournit un vecteur $\tilde{Y}_i^q(k)$, $k$= 0,..., $M$ - $r$-1 (l'indice $q$ a été ajouté pour souligner que ce vecteur a été obtenu en prenant pour hypothèse que la séquence était synchronisée à l'instant $q$) duquel on ne retient que les $r$ premières valeurs donnant, au moyen de décisions dures, le contenu du registre à l'instant initial $q$. Les valeurs $\tilde{Y}_i^q(k)$ sont des logarithmes de rapports de vraisemblance (LLR) et donc le contenu du registre à décalage à l'instant $q$ est donné par :

$$A_i^q(k) = \mathrm{sgn}\left(\tilde{Y}_i^q\right), \ k = 0,...,r-1 \tag{10}$$

où sgn(.) est la fonction signe associant à toute valeur positive la valeur +1 et à toute valeur négative la valeur -1.

A l'étape 440, on compare le vecteur $A_i^q(k)$, $k$=0,...,$r$-1 avec les $I$ =32 mots possibles d'initialisation du registre à décalage de la séquence $y_i$, notés $\mathbf{A}_i^{init}$, $i$ = 1,.., $I$.

Ces mots d'initialisation se déduisent du mot d'initialisation $\mathbf{A}_y^{init} = \begin{pmatrix} 1 & \cdots & 1 \end{pmatrix}^T$ du registre à décalage de la séquence $y$. En effet, on rappelle que, d'après l'expression (5) :

$$y_i(k) = y(k+\alpha_i) + y(k+\beta_i) \tag{11}$$

ce qui se traduit matriciellement par :

$$\mathbf{A}_i = \left(\mathbf{G}_y^{\alpha_i} + \mathbf{G}_y^{\beta_i}\right)\mathbf{A}_y \tag{12}$$

où $\mathbf{A}_i$ et $\mathbf{A}_y$ sont respectivement le mot contenu dans le registre à décalage de la séquence $y_i$ et le mot contenu dans le registre à décalage de la séquence $y$, $\mathbf{G}_y$ est la matrice de transposition d'état, c'est-à-dire la matrice reliant les vecteurs de contenu du registre à décalage en des instants consécutifs, soit :

$$\mathbf{A}_y(k+1) = \mathbf{G}_y \mathbf{A}_y(k) \tag{13}$$

La matrice de transposition d'états $\mathbf{G}_y$ est donnée par :

$$\mathbf{G}_y = \begin{bmatrix} 0 & 1 & 0 & 0 & \cdots & 0 \\ 0 & 0 & 1 & 0 & \cdots & 0 \\ 0 & 0 & 0 & 1 & \cdots & 0 \\ \vdots & \vdots & \vdots & 0 & \ddots & 0 \\ 0 & 0 & 0 & 0 & \cdots & 1 \\ 1 & g_{r-1}^y & g_{r-2}^y & g_{r-3}^y & \cdots & g_0^y \end{bmatrix} \tag{14}$$

où les coefficients $g_0^y, ..., g_{r-1}^y$ sont ceux du polynôme générateur de la séquence $y$. Si l'on applique la relation (12) à l'instant d'initialisation, on a, en particulier :

$$\mathbf{A}_i^{init} = \left( \mathbf{G}_y^{\alpha_i} + \mathbf{G}_y^{\beta_i} \right) \mathbf{A}_y^{init} \tag{15}$$

Les vecteurs $\mathbf{A}_i^{init}$ peuvent être calculés à l'avance de manière à ne pas ralentir l'acquisition.

S'il existe un indice $i_0$ tel que :

$$\mathbf{A}_i^q = \mathbf{A}_{i_0}^{init} \tag{16}$$

on considère que le récepteur est synchronisé avec le signal GPS du satellite $i_0$ et la méthode d'acquisition se termine en 490. A défaut, la méthode d'acquisition se poursuit en incrémentant $q$ en 445, c'est-à-dire en partant de l'échantillon suivant, et en retournant à l'étape 410.

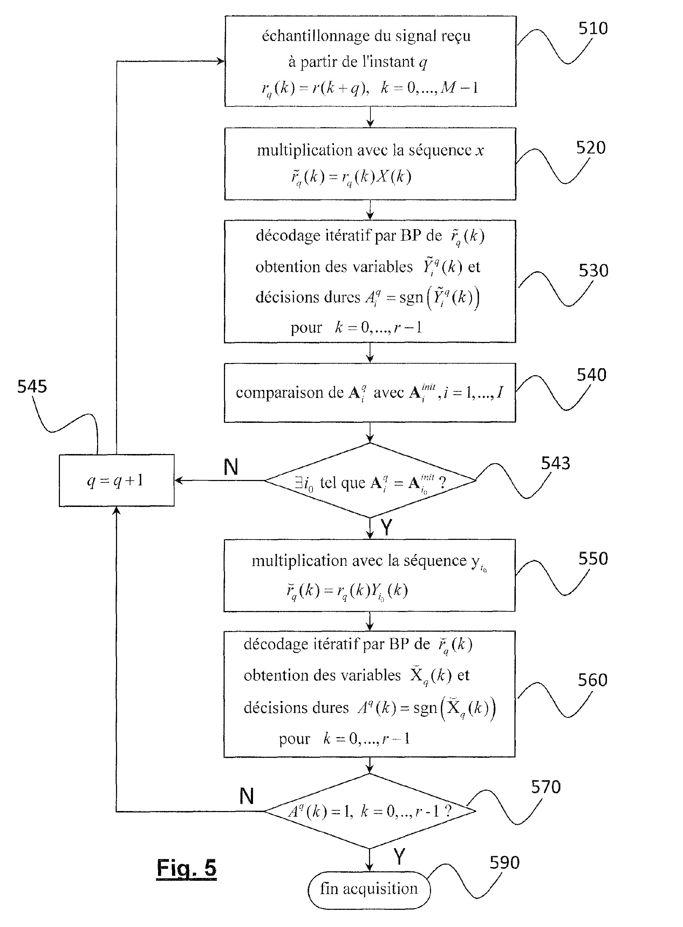

La Fig. 5 représente schématiquement une variante de la méthode d'acquisition de la Fig. 4.

Les étapes 510 à 545 sont identiques aux étapes 420 à 445 et leur description sera donc omise.

La variante de la Fig. 5 se distingue de celle de la Fig. 4 au sens où, une fois que le récepteur a déterminé l'indice $i_0$ du satellite avec lequel il considère être synchronisé, il procède à une phase de vérification. Cette phase de vérification permet de réduire considérablement la probabilité de fausse alarme. Elle est particulièrement avantageuse lorsque la méthode de décodage par passage de messages est implémentée dans sa version simplifiée « Min-Sum » mentionnée plus haut.

Cette phase de vérification est basée sur le principe suivant : si la séquence $y_{i_0}$ qui a été détectée est correcte, on peut alors l'utiliser pour retrouver la M-séquence X à partir du signal reçu $r_q(k)$, $k = 0,..., M-1$.

Plus précisément, à l'étape 550, on multiplie le signal reçu $r_q(k) = r(k+q)$, $k = 0,..., M-1$ avec la séquence $Y_{i_0}(k) = 1 - 2y_{i_0}(k)$, $k = 0,..., M-1$, représentation bipolaire de la M-séquence $y_{i_0}$. On obtient la séquence définie par :

$$\breve{r}_q(k) = r_q(k) Y_{i_0}(k) \tag{17}$$

Cette opération élimine la séquence $y_{i_0}$ du signal reçu, si celle-ci y est bien présente :

$$\breve{r}_q(k) = X(k) + \breve{w}(k) \tag{18}$$

où $X(k) = 1 - 2x(k)$, $k = 0,..., M-1$, est la représentation bipolaire de la M-séquence $x$ et où $\breve{w}(k)$ regroupe toutes les sources de bruit.

On comprendra que l'étape 550 est en quelque sorte la « symétrique » de l'étape 520.

Le vecteur $\breve{r}_q{}^!(k)$, $k=0,...,$ $M$-1, étant une observation bruitée de $M$ bribes consécutives de la M-séquence $x$, on en effectue à l'étape 560 un décodage itératif à l'aide d'un algorithme à passage de messages, de type « Sum-Product» ou « Min-Sum ». Par exemple, si un algorithme Min-Sum a été utilisé pour le décodage de $\tilde{r}_q(k)$, $k=0,...,$ $M$-1 à l'étape 530, le type algorithme sera avantageusement utilisé pour le décodage de $\breve{r}_q{}^!(k)$, $k=0,...,$ $M$-1. Les contraintes sont données par les lignes de la matrice **H** dans laquelle les coefficients sont ici celui du polynôme générateur $g_x(D)$.

Quel que soit le type de l'algorithme, le décodage du mot, $\breve{r}_q{}^!(k)$, $k=0,...,$ $M$-1 (ou d'une partie de ce mot seulement puisque celui-ci présente un redondance très élevée) fournit un vecteur $\breve{X}_q{}^!(k)$, $k=0,...,$ $M$-$r$-1 (l'indice $q$ a été ajouté pour souligner que ce vecteur a été obtenu en prenant pour hypothèse que la séquence était synchronisée à l'instant $q$) duquel on ne retient que les $r$ premières valeurs donnant, au moyen de décisions dures, le contenu du registre à l'instant initial $q$. Les valeurs $\breve{X}_q{}^!(k)$ sont des logarithmes de rapports de vraisemblance (LLR) et donc le contenu du registre à décalage à l'instant $q$ est donné par :

$$A^q(k) = \mathrm{sgn}\left( \breve{X}_q(k) \right), \ k = 0,...,r-1 \tag{19}$$

A l'étape 570, on vérifie si le vecteur $\mathbf{A}^q$ est égal au vecteur d'initialisation de la M-séquence $X$, autrement dit si $A^q(k)=1$, $k=0,...,$ $r$-1.

Si c'est bien le cas, c'est-à-dire si la vérification est positive, on conclut que le récepteur est bien synchronisé sur le signal GPS du satellite $i_0$. La méthode d'acquisition s'achève alors en 590.

En revanche, si ce n'est pas le cas, la synchronisation avec le signal GPS du satellite $i_0$ est infirmée. La méthode d'acquisition se poursuit en incrémentant $q$ en 575, c'est-à-dire en partant de l'échantillon suivant, et en retournant à l'étape 510.

La probabilité de fausse alarme dans le cadre de cette variante est égale à $P_{fa}^2$ où $P_{fa}$ est la probabilité de fausse alarme obtenue avec la méthode d'acquisition (sans vérification) de la Fig. 4. Ainsi, par exemple, si la probabilité de fausse alarme sans vérification est de $10^{-3}$, celle avec vérification sera de l'ordre de $10^{-6}$.

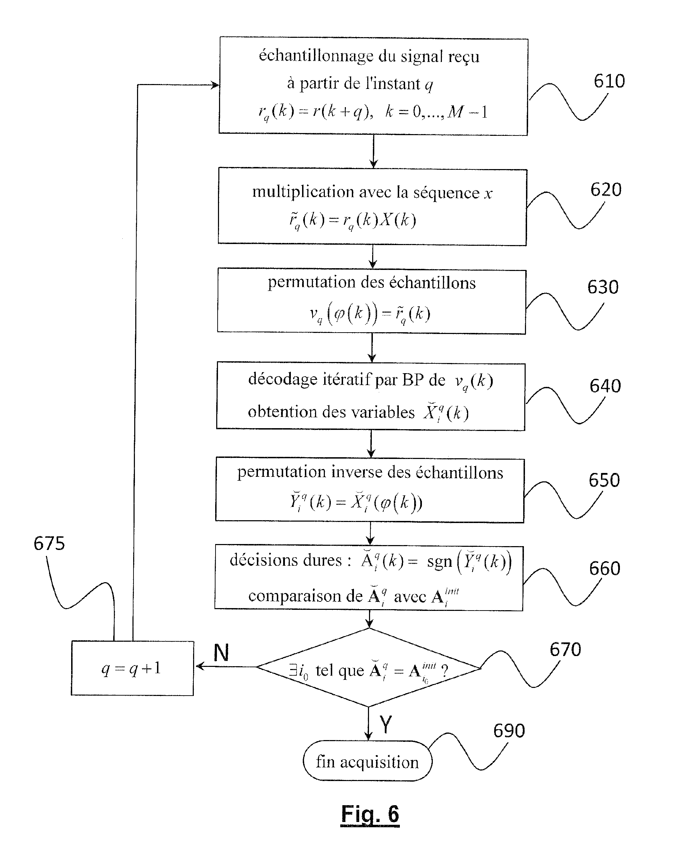

La Fig. 6 représente schématiquement une méthode d'acquisition d'un signal GPS selon un second mode de réalisation de l'invention.

Ce mode de réalisation tire parti du fait que deux M-séquences sur le même corps de Galois $GF(2^r)$ sont liées par une relation de décimation. Ainsi, si $u$ et $v$ sont deux M-séquences générées par des polynômes primitifs de degré $r$, on a :

$$u(k) = v(dk + h) \tag{20}$$

où $d$ est un facteur de décimation et $h$ est une constante dépendant du contenu initial des registres des M-séquences $u$ et $v$.

Pour une paire de séquences préférentielles $x,y$, le facteur de décimation vaut $d=2^e+1$ avec la condition $\gcd(2^e+1,2^r-1)=1$.

Dans le cas des polynômes générateurs $g_x$ et $g_y$ donnés en (4), $r$=10, et l'on peut alors montrer que $e = 6$, d'où $d = 65$ et, compte tenu des mots d'initialisation des registres pour les séquences $x$, $y$ :

$$y(k) = x\left(65k + 27300\right) \tag{21}$$

Si l'on définit la séquence $x_i$ par $x_i(k) = x(k-65\tau_i)$, on a :

$$y_i(k) = x_i(65k + 27300) \tag{22}$$

La relation entre la séquence $y_i$ et la séquence $x_i$ est indépendante de l'indice $i$, autrement dit celle-ci reste valable quel que soit le satellite.

On considérera là encore dans un premier temps la synchronisation du récepteur par rapport à un signal satellitaire.

Le récepteur échantillonne le signal reçu à la fréquence bribe, après démodulation en bande de base et forme en 610, à chaque instant $q$, le vecteur $r_q(k) = r(k+q)$, $k= 0,..,M-1$, constitué de $M$ échantillons successifs du signal reçu.

A l'étape 620, on effectue une multiplication bribe à bribe du signal reçu avec la M-séquence $x$ pour obtenir les échantillons retraités $\tilde{r}_q(k)$, $k=0,..,M-1$ comme définis en relation (6).

A l'étape 630, on effectue une permutation des $M$ échantillons retraités au moyen de la permutation :

$$\varphi(k) = dk + h \mod(N) \qquad (23)$$

c'est-à-dire dans le cas des polynômes générateurs $g_x$ et $g_y$ donnés en (4) :

$$\varphi(k) = 65k + 27300 \mod(1023) \qquad (23')$$

On forme la séquence $v_q$ obtenue par permutation de ces échantillons :

$$v_q\left(\varphi\left(k\right)\right) = \tilde{r}_q\left(k\right), k = 0,..,M-1 \qquad (24)$$

On notera que cette permutation est indépendante du satellite $i$ que l'on considère.

Selon une variante non illustrée, on acquiert non pas $M$ échantillons $r_q(k)$ en 610 mais $LM$ échantillons, et, après multiplication en 620, bribe à bribe, avec la séquence $x$ (on rappelle que celle-ci se répète avec une périodicité $M$), on forme la séquence $v_q$ par sommation cohérente sur $L$ blocs:

$$v_q\left(\varphi\left(k\right)\right) = \sum_{\ell=0}^{L-1} \tilde{r}_q\left(k+\ell M\right), k = 0,...,M-1 \qquad (24')$$

Dans tous les cas, on effectue ensuite à l'étape 640 un décodage itératif par passages de message du mot $v_q(k)$, $k =0,...,M-1$. Ce mot représente en effet une observation bruitée de la séquence $x_i(k)$, $k=0,..,M-1$. Le décodage itératif est réalisé au moyen de la matrice de parité $\mathbf{H}$ (selon l'expression (9), dans laquelle les coefficients $g_0,...,g_r$ sont ceux du polynôme $g_x(D)$).

Au terme du décodage itératif, on obtient une séquence de logarithmes de rapports de vraisemblance (LLRs) notés $\breve{X}_i^q(k)$, $k =0,...,M-1$.

A l'étape 650, on effectue la permutation inverse des échantillons $\breve{X}_i^q(k)$, $k = 0,...,M-1$, pour obtenir les logarithmes de rapport de vraisemblance :

$$\breve{Y}_i^q(k) = \breve{X}_i^q(\varphi(k)) \qquad (25)$$

A l'étape 660, on détermine le contenu du registre à décalage de la séquence $y_i$ à l'instant $q$, soit :

$$\breve{A}_i^q(k) = \text{sgn}\left(\breve{Y}_i^q(k)\right), k = 0,...,r-1 \qquad (26)$$

et l'on compare le vecteur $\breve{\mathbf{A}}_i^q$ de composantes $\breve{A}_i^q(k)$, $k=0,...,r-1$, avec les vecteurs d'initialisation des différentes séquences $y_i$, $i=1,...,I$, c'est-à-dire avec les vecteurs $\mathbf{A}_i^{init}$ préalablement calculés au moyen de l'expression (15).

S'il existe, en 670, un indice $i_0$ tel que :

$$\breve{\mathbf{A}}_i^q = \mathbf{A}_{i_0}^{init} \qquad (27)$$

on considère que le récepteur est synchronisé avec le signal GPS du satellite $i_0$ et la méthode d'acquisition se termine en 690. A défaut, la méthode d'acquisition se poursuit en incrémentant $q$ en 675, c'est-à-dire en partant de l'échantillon suivant, et en retournant à l'étape 610.

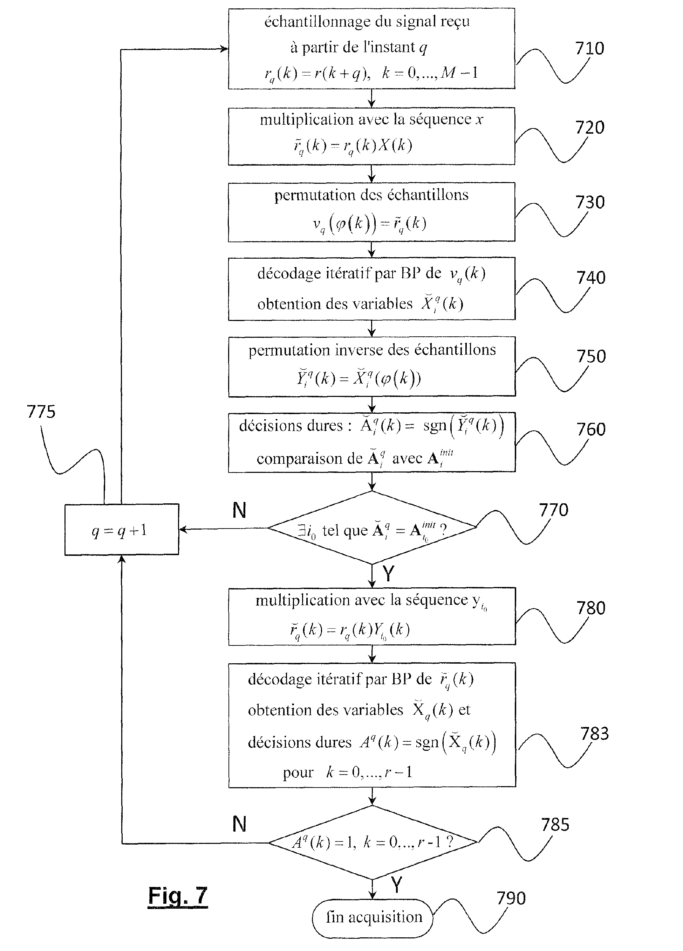

Ce second mode de réalisation peut être également décliné selon une variante, illustrée en Fig. 7, dans laquelle l'on procède à une vérification de la synchronisation avec le satellite $i_0$.

Comme déjà indiqué dans le cadre du premier mode de réalisation, cette phase de vérification permet de réduire considérablement la probabilité de fausse alarme et est particulièrement avantageuse lorsque le décodage itératif de $v_q(k)$, $k = 0,..,M$-1 est effectué selon l'algorithme « Min-Sum ».

Les étapes 710 à 775 sont identiques aux étapes 610 à 675 et leur description ne sera donc pas reprise ici. Seule la phase de vérification sera détaillée :

A l'étape 780, on multiplie le signal reçu $r_q(k) = r(k+ q)$, $k= 0,..., M$-1 avec la séquence $Y_{i_0}(k)=1-2y_{i_0}(k)$, $k=0,...,M$-1, représentation bipolaire de la M-séquence $y_{i_0}$. Cette multiplication élimine du signal reçu la M-séquence $y_{i_0}$. On obtient la séquence $\breve{r}_q^{\iota}$ définie par l'expression (17).

On effectue à l'étape 783 un décodage itératif à l'aide d'un algorithme à passage de messages, de type « Sum-Product» ou « Min-Sum ». Par exemple, si un algorithme Min-Sum a été utilisé pour le décodage de $v_q(k)$, $k=0,..,M$-1, à l'étape 740, le type algorithme sera avantageusement utilisé pour le décodage de $\breve{r}_q^{\iota}(k)$, $k =0,..,M$ -1. Les contraintes sont données par les lignes de la matrice **H** dans laquelle les coefficients sont ici celui du polynôme générateur $g_x(D)$.

Quel que soit le type de l'algorithme, le décodage fournit un vecteur $Xq(k)$, $k =0,...,M$-1, duquel on ne retient que les $r$ premières composantes donnant, au moyen de décisions dures, le contenu du registre à l'instant initial $q$. Soit $\mathbf{A}^q$ le vecteur constitué par les $r$ premières composantes en question.

A l'étape 785, on vérifie si le vecteur $\mathbf{A}^q$ est égal au vecteur d'initialisation de la M-séquence $x$, autrement dit si $A^q(k) =1, k =0,...,r$-1.

Si c'est bien le cas, c'est-à-dire si la vérification est positive, on conclut que le récepteur est bien synchronisé sur le signal GPS du satellite $i_0$. La méthode d'acquisition s'achève alors en 790.

En revanche, si ce n'est pas le cas, la synchronisation avec le signal GPS du satellite $i_0$ est infirmée. La méthode d'acquisition se poursuit en incrémentant $q$ en 787, c'est-à-dire en partant de l'échantillon suivant, et en retournant à l'étape 710.

Dans les modes de réalisation précédents, le récepteur détermine s'il est synchronisé à un instant donné par rapport au signal GPS du canal C/A pour un satellite $i_0$ donné. En pratique, le canal C/A comprend des signaux d'une pluralité de satellites d'indice $i_0, .... i_{Q-1}$ où $Q$ est le nombre de satellite visibles du récepteur. La méthode d'acquisition exposée plus haut fournit le satellite $i_0$ présentant le rapport signal sur bruit le plus élevé au niveau de récepteur. Une fois ce premier signal acquis, on peut reconstruire le signal reçu du satellite $i_0$, en bande de base :

$$\hat{r}_{i_0}(k) = \left( \hat{\rho}_{i_0} e^{2\pi j\hat{\theta}_{i_0}} \right) x_{i_0}(k) e^{2\pi jk\widehat{\Delta F_{i_0}}T} \tag{28}$$

que l'on peut ensuite soustraire du signal reçu en bande de base (expression (2)). $\hat{\rho}_{i0} e^{2\pi j\theta_{i0}}$ est une estimation du coefficient d'atténuation complexe sur le canal entre le satellite et le récepteur (obtenu par exemple au moyen de symboles pilotes) et $\widehat{\Delta F_{i_0}}$ est l'offset de fréquence estimé par le récepteur. $x_{i_0}(k)$ est un message de synchronisation connu du récepteur.

On poursuit ensuite avec l'acquisition du second satellite à partir du signal $r(k) - \hat{r}_{i_0}(k)$ et ainsi de suite, selon un schéma SIC (*Serial Interference Cancellation*) connu en soi.

## Revendications

**1.** Méthode d'acquisition d'un signal satellitaire par un récepteur, ledit signal étant étalé par une séquence de Gold ($C_i$) à une fréquence bribe, ladite séquence de Gold étant obtenue comme somme d'une première M-séquence ($x$) générée au moyen d'un premier registre à décalage et d'une seconde M-séquence ($y_i$) générée au moyen d'un second registre à décalage, ladite seconde M-séquence identifiant un satellite parmi une pluralité de satellites, **caractérisée en ce que** :

(a) le signal reçu en bande de base est échantillonné (410,510,610,710) à la fréquence bribe à partir d'un instant déterminé ($q$) pour fournir une séquence de premiers échantillons ($r_q(k)$, $k$ =0,..,$M$ -1);

(b) la séquence desdits premiers échantillons est multipliée (420,520,620,720), bribe à bribe, par ladite première M-séquence pour fournir une séquence de seconds échantillons (($\tilde{r}_q(k)$,$k$ =0,..,$M$ -1);

(c) la séquence de seconds échantillons est décodée au moyen d'un décodage itératif à passage de messages (430,530,640,740) pour fournir une estimation du contenu du second registre à décalage au dit instant déterminé ;

(d) le contenu du second registre à décalage ainsi estimé est comparé (440, 540, 660, 760) à une pluralité de contenus possibles du second registre à décalage pour les différents satellites de ladite pluralité, et en cas de succès de la comparaison pour un satellite identifié ($i_0$), le récepteur est synchronisé avec ledit satellite identifié à l'instant déterminé.

2.  Méthode d'acquisition d'un signal satellitaire selon la revendication 1, **caractérisée en ce que** si le contenu du second registre à décalage ainsi estimé ne correspond à aucun desdits contenus possibles, l'instant déterminé est incrémenté d'une bribe et les étapes (a) à (d) sont itérées.

3.  Méthode d'acquisition d'un signal satellitaire selon la revendication 1, **caractérisée en ce que** l'estimation du contenu du second registre à décalage est réalisée en prenant des décisions dures sur les r premières valeurs $\left(\tilde{Y}_i^{\,q}(k)\right)$ décodées fournies par le décodage itératif à passage de messages, où $r$ est le nombre de positions dans le premier/second registre à décalage.

4.  Méthode d'acquisition d'un signal satellitaire selon la revendication 3, **caractérisée en ce que** le décodage itératif à passage de messages de l'étape (c) utilise la matrice de parité :

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

dans laquelle $g_r$ =1 et $g_0$,..., $g_{r-1}$ sont les coefficients du polynôme générateur de la seconde M-séquence.

5.  Méthode d'acquisition d'un signal satellitaire selon la revendication 1, **caractérisée en ce que**, la seconde M-séquence étant obtenue en sommant les contenus en deux positions $\alpha_i$, $\beta_i$ du second registre à décalage, où $i$ est un indice identifiant le satellite parmi ladite pluralité de satellites, les contenus possibles du second registre à décalage pour les différents satellites sont donnés par les vecteurs :

$$\mathbf{A}_i^{init} = \left( \mathbf{G}_y^{\alpha_i} + \mathbf{G}_y^{\beta_i} \right) \mathbf{A}_y^{init}$$

où $\mathbf{A}_y^{\text{int}}$ est un vecteur donnant contenu du second registre à décalage à un instant de référence, et $\mathbf{G}_y$ la matrice de changement d'état du second registre à décalage.

6.  Méthode d'acquisition d'un signal satellitaire selon la revendication 1, **caractérisée en ce que** :

la séquence de seconds échantillons est permutée (630,730) à l'aide d'une relation de permutation $\varphi(k)=dk+h$ mod($N$) où $k$ est le rang de l'échantillon, $d$ est un facteur de décimation, $h$ est une valeur d'offset et $N$ est la longueur de la première M-séquence, la permutation étant effectuée avant l'étape (c) ;

l'étape (c) fournit une séquence de valeurs décodées $\left( \breve{X}_i^q(k) \right)$ ;

la séquence de valeurs décodées est permutée (650,750) à l'aide de la relation de permutation inverse à ladite relation de permutation pour fournir une séquence de valeurs permutées $\left( \breve{Y}_i^q(k) \right)$;

l'estimation du contenu du second registre à décalage (660,760) est réalisée en prenant des décisions dures sur les $r$ premières valeurs de la séquence de valeurs permutées, où $r$ est le nombre de positions dans le premier/second registre à décalage.

7. Méthode d'acquisition d'un signal satellitaire selon la revendication 6, **caractérisée en ce que** le décodage itératif à passage de messages de l'étape (c) utilise la matrice de parité :

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

dans laquelle $g_r = 1$ et $g_0, ..., g_{r-1}$ sont les coefficients du polynôme générateur de la première M-séquence.

8. Méthode d'acquisition d'un signal satellitaire selon l'une des revendications précédentes, **caractérisée en ce que** l'on vérifie que le récepteur est bien synchronisé avec ledit satellite identifié en :

(e) multipliant la séquence desdits premiers échantillons (550,780), bribe à bribe, par la seconde M-séquence associée audit satellite identifié pour fournir une séquence de troisièmes échantillons (($\breve{r}_q^{|}(k)$, $k = 0, .., M-1$);

(f) décodant la séquence de troisièmes échantillons au moyen d'un décodage itératif à passage de messages (560, 783) pour fournir une estimation du contenu du premier registre à décalage au dit instant déterminé.

9. Méthode d'acquisition d'un signal satellitaire selon la revendication 8, **caractérisée en ce que** si le contenu du premier registre à décalage ainsi estimé ne correspond au contenu initial du premier registre, l'instant déterminé est incrémenté d'une bribe et les étapes (a) à (f) sont itérées.

10. Méthode d'acquisition d'un signal satellitaire selon la revendication 9, **caractérisée en ce que** l'estimation du contenu du premier registre à décalage est réalisée en prenant des décisions dures sur les $r$ premières valeurs ($\bar{X}_q^{|}(k)$, $k = 0, .., r-1$) décodées fournies par le décodage itératif à passage de messages, où $r$ est le nombre de positions dans le premier/second registre à décalage.

11. Méthode d'acquisition d'un signal satellitaire selon l'une des revendications 8 à 10, **caractérisée en ce que** le décodage itératif à passage de messages de l'étape (f) utilise la matrice de parité

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

dans laquelle $g^r$ =1 et $g_0,...,g_{r-1}$ sont les coefficients du polynôme générateur de la première M-séquence.

12. Méthode d'acquisition d'un signal satellitaire selon la revendication 8, **caractérisée en ce que** le décodage itératif à passage de messages de l'étape (c) et le décodage itératif à passage de messages de l'étape (f) utilisent tous deux un algorithme de type « Min-Sum ».

**Patentansprüche**

1. Verfahren zur Erfassung eines Satellitensignals durch einen Empfänger, wobei das Satellitensignal durch eine Gold-Sequenz ($c_i$) auf eine Chipfrequenz gespreizt ist, wobei die Gold-Sequenz erhalten wird als Summe einer ersten M-Sequenz ($x$), die mit Hilfe eines ersten Schieberegisters erzeugt wird, und einer zweiten M-Sequenz ($y_i$), die mit Hilfe eines zweiten Schieberegisters erzeugt wird, wobei die zweite M-Sequenz einen Satelliten aus einer Mehrzahl von Satelliten identifiziert, **dadurch gekennzeichnet, dass**:

   (a) das im Basisband empfangene Signal mit der Chipfrequenz ab einem bestimmten Zeitpunkt ($q$) abgetastet wird (410,510,610,710), um eine Sequenz von ersten Abtastwerten ($r_q(k)$, $k = 0,...,M$ - 1) zu liefern;
   (b) die Sequenz der ersten Abtastwerte Chip für Chip mit der ersten M-Sequenz multipliziert wird (420,520,620,720), um eine Sequenz von zweiten Abtastwerten ($\tilde{r}_q(k)$, $k = 0, .., M\text{-}1$) zu liefern;
   (c) die Sequenz der zweiten Abtastwerte mittels einer iterativen Nachrichtenaustausch-Dekodierung dekodiert wird (430,530,640,740), um eine Abschätzung des Inhalts des zweiten Schieberegisters an dem bestimmten Zeitpunkt zu liefern;
   (d) der derart bestimmte Inhalt des zweiten Schieberegisters mit einer Mehrzahl von möglichen Inhalten des zweiten Schieberegisters für die verschiedenen Satelliten aus der Mehrzahl verglichen wird (440, 540, 660, 760), und im Fall des erfolgreichen Vergleichs für einen identifizierten Satelliten ($i_0$) der Empfänger mit dem identifizierten Satelliten an dem bestimmten Zeitpunkt synchronisiert wird.

2. Verfahren zur Erfassung eines Satellitensignals nach Anspruch 1, **dadurch gekennzeichnet, dass** dann, wenn der derart bestimmte Inhalt des zweiten Schieberegisters keinem der möglichen Inhalte entspricht, der bestimmte Zeitpunkt um ein Chip inkrementiert wird und die Schritte (a) bis (d) iteriert werden.

3. Verfahren zur Erfassung eines Satellitensignals nach Anspruch 1, **dadurch gekennzeichnet, dass** die Abschätzung des Inhalts des zweiten Schieberegisters realisiert wird durch Treffen von harten Entscheidungen auf den dekodierten r ersten Werten $\left(\tilde{Y}_i^q(k)\right)$, die durch die iterative Nachrichtenaustausch-Dekodierung geliefert werden, wobei r die Zahl von Positionen in dem ersten/zweiten Schieberegister ist.

4. Verfahren zur Erfassung eines Satellitensignals nach Anspruch 3, **dadurch gekennzeichnet, dass** die iterative Nachrichtenaustausch-Dekodierung des Schritts (c) die Paritätsmatrix verwendet:

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

wobei $g_r = 1$ und $g_0, ..., g_{r-1}$ die Koeffizienten des erzeugenden Polynoms der zweiten M-Sequenz sind.

5. Verfahren zur Erfassung eines Satellitensignals nach Anspruch 1, **dadurch gekennzeichnet, dass** die zweite M-Sequenz erhalten wird durch Summieren der Inhalte des zweiten Schieberegisters an zwei Positionen $\alpha_i$, $\beta_i$, wobei $i$ ein Index ist, der den Satelliten aus der Mehrzahl von Satelliten identifiziert, und dass die möglichen Inhalte des zweiten Schieberegisters für die verschiedenen Satelliten gegeben sind durch die Vektoren:

$$\mathbf{A}_i^{init} = \left( \mathbf{G}_y^{\alpha_i} + \mathbf{G}_y^{\beta_i} \right) \mathbf{A}_y^{init}$$

wobei $\boldsymbol{A}_y^{int}$ ein Vektor ist, der den Inhalt des zweiten Schieberegisters an einem Referenzzeitpunkt angibt, und $\boldsymbol{G}_y$ die Zustandsänderungsmatrix des zweiten Schieberegisters ist.

6. Verfahren zur Erfassung eines Satellitensignals nach Anspruch 1, **dadurch gekennzeichnet, dass**:

die Sequenz von zweiten Abtastwerten mit Hilfe einer Permutationsrelation $\varphi(k) = dk + h\ mod(N)$ permutiert wird (630,730), wobei $k$ der Rang des Abtastwerts ist, $d$ ein Dezimierungsfaktor, $h$ ein Offsetwert ist und $N$ die Länge der ersten M-Sequenz ist, wobei die Permutation vor dem Schritt (c) durchgeführt wird;

der Schritt (c) eine Sequenz von dekodierten Werten $\left( \check{X}_i^q(k) \right)$ liefert;

die Sequenz von dekodierten Werten permutiert wird (650,750) mit Hilfe der Permutationsrelation, die invers ist zu der Permutationsrelation, um eine Sequenz von permutierten Werten $\left( \check{Y}_i^q(k) \right)$ zu liefern;

wobei die Abschätzung des Inhalts des zweiten Schieberegisters (660,760) realisiert wird durch Treffen von harten Entscheidungen auf den r ersten Werten der Sequenz von permutierten Werten, wobei $r$ die Zahl von Positionen in dem ersten/zweiten Schieberegister ist.

7. Verfahren zur Erfassung eines Satellitensignals nach Anspruch 6, **dadurch gekennzeichnet, dass** die iterative Nachrichtenaustausch-Dekodierung des Schritts (c) die Paritätsmatrix verwendet:

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

bei der $g_r = 1$ und $g_0, ..., g_{r-1}$ die Koeffizienten des erzeugenden Polynoms der ersten M-Sequenz sind.

8. Verfahren zur Erfassung eines Satellitensignals nach einem der vorhergehenden Ansprüche, **dadurch gekennzeichnet, dass** man überprüft, ob der Empfänger gut mit dem identifizierten Satelliten synchronisiert ist, indem man:

(e) die Sequenz der ersten Abtastwerte (550,780) Chip für Chip mit der zweiten M-Sequenz multipliziert, die dem identifizierten Satelliten zugeordnet ist, um eine Sequenz von dritten Abtastwerten $\left( \left( \check{r}_q(k), k = 0,.., M - 1 \right) \right)$ zu liefern;

(f) die Sequenz von dritten Abtastwerten mit Hilfe einer iterativen Nachrichtenaustausch-Dekodierung (560, 783) dekodiert, um eine Abschätzung des Inhalts des ersten Schieberegisters an dem gegebenen Zeitpunkt zu liefern.

9. Verfahren zur Erfassung eines Satellitensignals nach Anspruch 8, **dadurch gekennzeichnet, dass** dann, wenn der derart bestimmte Inhalt des ersten Schieberegisters nicht dem anfänglichen Inhalt des ersten Registers entspricht, der bestimmte Zeitpunkt um ein Chip inkrementiert wird und die Schritte (a) bis (f) iteriert werden.

10. Verfahren zur Erfassung eines Satellitensignals nach Anspruch 9, **dadurch gekennzeichnet, dass** die Abschätzung des Inhalts des ersten Schieberegisters realisiert wird, indem man harte Entscheidungen auf den dekodierten $r$ ersten Werten $\left( \check{X}_q(k), k = 0, .., r - 1 \right)$ trifft, die durch die iterative Nachrichtenaustausch-Dekodierung geliefert werden, wobei r die Zahl von Positionen in dem ersten/zweiten Schieberegister ist.

**11.** Verfahren zur Erfassung eines Satellitensignals nach einem der Ansprüche 8 bis 10, **dadurch gekennzeichnet, dass** die iterative Nachrichtenaustausch-Dekodierung des Schritts (f) die Paritätsmatrix verwendet

$$H = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

bei der $g^r = 1$ und $g_0$, ..., $g_{r-1}$ die Koeffizienten des erzeugenden Polynoms der ersten M-Sequenz sind.

**12.** Verfahren zur Erfassung eines Satellitensignals nach Anspruch 8, **dadurch gekennzeichnet, dass** die iterative Nachrichtenaustausch-Dekodierung des Schritts (c) und die iterative Nachrichtenaustausch-Dekodierung des Schritts (f) beide einen Algorithmus vom Typ « Min-Sum » verwenden.

**Claims**

**1.** Method of acquiring a satellite signal by a receiver, said signal being spread by a Gold sequence ($c_i$) at a chip frequency, said Gold sequence being obtained as the sum of a first M-sequence ($x$) generated using a first shift register and a second M-sequence ($y_i$) generated using a second shift register, said second M-sequence identifying one satellite among a plurality of satellites, **characterised in that**:

(a) the signal received in base band is sampled (410,510,610,710) at the chip frequency starting from a determined time ($q$) to provide a sequence of first samples ($r_q(k)$, $k = 0,..,M$ -1);
(b) the sequence of said first samples is multiplied (420,520,620,720), chip by chip, by said first M-sequence to provide a sequence of second samples ($\tilde{r}_q(k)$, $k = 0,..,M$ -1);
(c) the sequence of second samples is decoded using an iterative message passing decoding (430,530,640,740) to supply an estimate of the content of the second shift register at said determined time;
(d) the content of the second shift register thus estimated is compared (440, 540, 660, 760) with a plurality of possible contents of the second shift register for the different satellites of said plurality, and if the comparison is successful for an identified satellite ($i_0$), the receiver is synchronised with said identified satellite at the determined time.

**2.** Method of acquiring a satellite signal according to claim 1, **characterised in that** if the content of the second shift register thus estimated does not correspond to any of said possible contents, the determined time is incremented by one chip and steps (a) to (d) are iterated.

**3.** Method of acquiring a satellite signal according to claim 1, **characterised in that** the content of the second shift register is estimated by taking hard decisions on the first $r$ decoded values $\left( \tilde{Y}_i^{\,q}(k) \right)$ provided by the iterative message passing decoding, where r is the number of positions in the first/second shift register.

**4.** Method of acquiring a satellite signal according to claim 3, **characterised in that** the iterative message passing decoding in step (c) uses the parity matrix:

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

in which $g_r = 1$ and $g_0,..., g_{r-1}$ are the coefficients of the polynomial generating the second M-sequence.

**5.** Method of acquiring a satellite signal according to claim 1, **characterised in that** the second M-sequence being obtained by summating the contents in two positions $\alpha_i$, $\beta_i$ of the second shift register, where $i$ is an index identifying the satellite among said plurality of satellites, the possible contents of the second shift register for the different satellites are given by vectors:

$$\mathbf{A}_i^{init} = \left( \mathbf{G}_y^{\alpha_i} + \mathbf{G}_y^{\beta_i} \right) \mathbf{A}_y^{init}$$

where $\mathbf{A}_y^{int}$ is a vector giving the content of the second shift register at a reference time, and $\mathbf{G}_y$ is the state change matrix of the second shift register.

**6.** Method of acquiring a satellite signal according to claim 1, **characterised in that**:

the sequence of second samples is permuted (630,730) using a permutation relation $\varphi(k) = dk + h \bmod(N)$ where $k$ is the rank of the sample, $d$ is a decimation factor, $h$ is an offset value and $N$ is the length of the first M-sequence, switching being done before step (c);

step (c) provides a sequence of decoded values $\left( \breve{X}_i^q(k) \right)$;

the sequence of decoded values is permuted (650,750) using the permutation relation inverse to said permutation relation to provide a sequence of permuted values $\left( \breve{Y}_i^q(k) \right)$;

the content of the second shift register (660,760) is estimated by taking hard decisions on the first $r$ values of the sequence of permuted values, where r is the number of positions in the first/second shift register.

**7.** Method of acquiring a satellite signal according to claim 6, **characterised in that** the iterative message passing decoding in step (c) uses the parity matrix:

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

in which $g_r = 1$ and $g_0,..., g_{r-1}$ are the coefficients of the polynomial generating the first M-sequence.

**8.** Method of acquiring a satellite signal according to one of the previous claims, **characterised in that** it is checked that the receiver is properly synchronised with said identified satellite by:

(e) multiplying the sequence of said first samples (550,780), chip by chip, by the second M-sequence associated with said identified satellite to provide a sequence of third samples (($\breve{r}_q^{\,|}(k)$, $k$ =0,..,$M$ -1);

(f) decoding the sequence of third samples using an iterative message passing decoding (560, 783) to provide an estimate of the content of the first shift register at said determined time.

9. Method of acquiring a satellite signal according to claim 8, **characterised in that** if the content of the first shift register thus estimated does not correspond to the initial content of the first register, the determined time is incremented by one chip and steps (a) to (f) are iterated.

10. Method of acquiring a satellite signal according to claim 9, **characterised in that** the content of the first shift register is estimated by taking hard decisions on the first $r$ decoded values ($\bar{X}_q^{\,|}(k)$, $k = 0,..,r$-1) provided by the iterative message passing decoding, where r is the number of positions in the first/second shift register.

11. Method of acquiring a satellite signal according to one of claims 8 to 10, **characterised in that** the iterative message passing decoding in step (f) uses the parity matrix

$$\mathbf{H} = \begin{bmatrix} g_r & \cdots & g_0 & 0 & \cdots & \cdots & 0 \\ 0 & g_r & \cdots & g_0 & 0 & \cdots & 0 \\ \vdots & \ddots & \ddots & \ddots & \ddots & \ddots & \vdots \\ 0 & \cdots & 0 & g_r & \cdots & g_0 & 0 \\ 0 & \cdots & \cdots & 0 & g_r & \cdots & g_0 \end{bmatrix}$$

in which $g_r$ =1 and $g_0$, ..., $g_{r-1}$ are the coefficients of the polynomial generating the first M-sequence.

12. Method of acquiring a satellite signal according to claim 8, **characterised in that** the iterative message passing decoding in step (c) and the iterative message passing decoding in step (f) both use a "Min-Sum" type algorithm.

**Fig. 1**

**Fig. 3**

| Satellite ID number | GPS PRN signal number | Code phase selection $G_2$ | Code delay chips | First 10 chips octal |
|---|---|---|---|---|
| 1 | 1 | 2 ⊕ 6 | 5 | 1440 |
| 2 | 2 | 3 ⊕ 7 | 6 | 1620 |
| 3 | 3 | 4 ⊕ 8 | 7 | 1710 |
| 4 | 4 | 5 ⊕ 9 | 8 | 1744 |
| 5 | 5 | 1 ⊕ 9 | 17 | 1133 |
| 6 | 6 | 2 ⊕ 10 | 18 | 1455 |
| 7 | 7 | 1 ⊕ 8 | 139 | 1131 |
| 8 | 8 | 2 ⊕ 9 | 140 | 1454 |
| 9 | 9 | 3 ⊕ 10 | 141 | 1626 |
| 10 | 10 | 2 ⊕ 3 | 251 | 1504 |
| 11 | 11 | 3 ⊕ 4 | 252 | 1642 |
| 12 | 12 | 5 ⊕ 6 | 254 | 1750 |
| 13 | 13 | 6 ⊕ 7 | 255 | 1764 |
| 14 | 14 | 7 ⊕ 8 | 256 | 1772 |
| 15 | 15 | 8 ⊕ 9 | 257 | 1775 |
| 16 | 16 | 9 ⊕ 10 | 258 | 1776 |
| 17 | 17 | 1 ⊕ 4 | 469 | 1156 |
| 18 | 18 | 2 ⊕ 5 | 470 | 1467 |
| 19 | 19 | 3 ⊕ 6 | 471 | 1633 |
| 20 | 20 | 4 ⊕ 7 | 472 | 1715 |
| 21 | 21 | 5 ⊕ 8 | 473 | 1746 |
| 22 | 22 | 6 ⊕ 9 | 474 | 1763 |
| 23 | 23 | 1 ⊕ 3 | 509 | 1063 |
| 24 | 24 | 4 ⊕ 6 | 512 | 1706 |
| 25 | 25 | 5 ⊕ 7 | 513 | 1743 |
| 26 | 26 | 6 ⊕ 8 | 514 | 1761 |
| 27 | 27 | 7 ⊕ 9 | 515 | 1770 |
| 28 | 28 | 8 ⊕ 10 | 516 | 1774 |
| 29 | 29 | 1 ⊕ 6 | 859 | 1127 |
| 30 | 30 | 2 ⊕ 7 | 860 | 1453 |
| 31 | 31 | 3 ⊕ 8 | 861 | 1625 |
| 32 | 32 | 4 ⊕ 9 | 862 | 1712 |
| — | 33 | 5 ⊕ 10 | 863 | 1745 |
| — | 34 | 4 ⊕ 10 | 950 | 1713 |
| — | 35 | 1 ⊕ 7 | 947 | 1134 |
| — | 36 | 2 ⊕ 8 | 948 | 1456 |
| — | 37 | 4 ⊕ 10 | 950 | 1713 |

## Fig. 2

échantillonnage du signal reçu

à partir de l'instant $q$

$r_q(k) = r(k+q), \quad k = 0,...,M-1$

410

multiplication avec la séquence $x$

$\tilde{r}_q(k) = r_q(k)X(k)$

420

décodage itératif par BP de $\tilde{r}_q(k)$

obtention des variables $\tilde{Y}_i^q(k)$ et

décisions dures $A_i^q = \mathrm{sgn}\left(\tilde{Y}_i^q(k)\right)$

pour $k = 0,...,r-1$

430

comparaison de $\mathbf{A}_i^q$ avec $\mathbf{A}_i^{init}, i = 1,...,I$

440

445

N

$q = q+1$

$\exists i_0$ tel que $\mathbf{A}_i^q = \mathbf{A}_{i_0}^{init}$

443

Y

fin acquisition

490

**<u>Fig. 4</u>**

échantillonnage du signal reçu
à partir de l'instant $q$

$$r_q(k) = r(k+q), \quad k = 0, ..., M-1$$

510

multiplication avec la séquence $x$

$$\tilde{r}_q(k) = r_q(k)X(k)$$

520

décodage itératif par BP de $\tilde{r}_q(k)$

obtention des variables $\tilde{Y}_i^q(k)$ et

décisions dures $A_i^q = \operatorname{sgn}\left(\tilde{Y}_i^q(k)\right)$

pour $k = 0, ..., r-1$

530

comparaison de $\mathbf{A}_i^q$ avec $\mathbf{A}_i^{init}, i = 1, ..., I$

540

545

$q = q + 1$

N

$\exists i_0$ tel que $\mathbf{A}_i^q = \mathbf{A}_{i_0}^{init}$ ?

543

Y

multiplication avec la séquence $y_{i_0}$

$$\breve{r}_q(k) = r_q(k)Y_{i_0}(k)$$

550

décodage itératif par BP de $\breve{r}_q(k)$

obtention des variables $\breve{X}_q(k)$ et

décisions dures $A^q(k) = \operatorname{sgn}\left(\breve{X}_q(k)\right)$

pour $k = 0, ..., r-1$

560

N

$A^q(k) = 1, \quad k = 0, ..., r-1$ ?

570

Y

590

**Fig. 5**

fin acquisition

échantillonnage du signal reçu
à partir de l'instant $q$
$$r_q(k) = r(k+q), \quad k = 0,...,M-1$$

610

multiplication avec la séquence $x$
$$\tilde{r}_q(k) = r_q(k)X(k)$$

620

permutation des échantillons
$$v_q\big(\varphi(k)\big) = \tilde{r}_q(k)$$

630

décodage itératif par BP de $v_q(k)$
obtention des variables $\breve{X}_i^q(k)$

640

permutation inverse des échantillons
$$\breve{Y}_i^q(k) = \breve{X}_i^q(\varphi(k))$$

650

675

décisions dures : $\breve{A}_i^q(k) = \text{sgn}\big(\breve{Y}_i^q(k)\big)$
comparaison de $\breve{A}_i^q$ avec $A_i^{init}$

660

$$q = q + 1$$

N $\longleftarrow$ $\exists i_0$ tel que $\breve{A}_i^q = A_{i_0}^{init}$ ?

670

Y

fin acquisition

690

**Fig. 6**

23

**Fig. 7**

**EP 2 770 644 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. POLYDOROS et al.** A unified approach to serial search spread spectrum code acquisition. *IEEE Trans. on. Comm.,* 1984, vol. 32 (5
- **F. PRINCIPE et al.** Rapid acquisition of Gold codes and related sequences using iterative message passing on redundant graphical models. *Proc. MIL-COM'06,* 2006
- **K.M. CHUGG.** A new approach to rapid PN code acquisition using iterative message passing techniques. *IEEE Journal on Selected Areas in Communications,* Mai 2005, vol. 21 (5), 884-897
- **F.R. KSCHICHANG et al.** Factor graphs and the Sum-Product algorithm. *IEEE Trans. on Information Theory,* Février 2001, vol. 47 (2
- **V. SAVIN.** Self-corrected Min-Sum decoding of LD-PC codes. *Proc. of Int'l Symposium on Information Theory (ISIT 2008), Toronto,* Juillet 2008